# DEMANDE DE BREVET EUROPEEN

(11) **EP 0 569 270 A1**
(43) Date de publication de la demande: **10.11.1993**
(21) Numéro de dépôt: 93401101.6
(22) Date de dépôt: 28.04.1993
(51) Int. Cl.: A01G 27/00, B65D 88/20

(54) **Réservoir d'eau, en particulier pour l'irrigation de plantes en pots**

(30) Priorité: 07.05.1992 FR 9205642
(71) Demandeur: HUTCHINSON, F-75008 Paris (FR)
(72) Inventeur: Buchy, Philippe, F-38170 Seyssinet (FR)
(74) Mandataire: Ramey, Daniel

(57) **Abrégé**

Réservoir d'eau, comprenant une enveloppe (10 fermée étanche en matière élastiquement extensible, munie de moyens (14,16) de raccordement à une conduite (18) d'arrivée d'eau sous pression, puis à un conduit de distribution d'eau, et un filet (12) en matière non extensible, entourant l'enveloppe (10) et limitant sa dilatation lors de son remplissage par de l'eau sous pression.

L'invention est notamment applicable à l'irrigation automatique de plantes en pots.

## Description

L'invention concerne un réservoir d'eau, destiné en particulier à l'irrigation de plantes en pots, mais pouvant également être utilisé à d'autres fins, par exemple pour l'alimentation d'un pulvérisateur ou d'une douche de camping ou de plage.

Les réservoirs de ce type sont habituellement réalisés en matière rigide et indéformable et doivent être placés au-dessus des plantes à arroser, pour permettre l'écoulement de l'eau par gravité vers les plantes. Leur utilisation est donc relativement délicate sur un balcon ou une terrasse d'une habitation et nuit de plus à l'esthétique.

D'autres réservoirs connus comprennent des moyens mécaniques ou électriques de mise sous pression de l'eau qu'ils contiennent, mais sont alors beaucoup plus onéreux.

L'invention a pour objet un réservoir d'eau qui ne présente pas ces inconvénients de la technique antérieure.

Le réservoir selon l'invention comprend une enveloppe fermée étanche munie de moyens de raccordement à une arrivée d'eau sous pression et à un conduit de distribution d'eau et est caractérisé en ce que cette enveloppe est réalisée au moins partiellement en matière élastiquement extensible de façon à ce que son remplissage par de l'eau sous pression provoque sa dilatation et sa mise en tension élastique, cette dernière permettant ensuite une distribution d'eau sous faible pression et en ce que le réservoir comprend également des moyens pour limiter la tension élastique de l'enveloppe à une valeur maximale prédéterminée, inférieure à la valeur de rupture ou de déchirement de la matière de l'enveloppe.

Le réservoir selon l'invention peut ainsi être placé sur le sol au même niveau que les pots ou bacs de plantes à irriguer. Il est très bon marché et permet une irrigation des plantes pendant une période de temps plus ou moins importante, en fonction de l'augmentation du volume de l'enveloppe résultant de son remplissage par de l'eau sous pression.

Les moyens limitant la tension élastique de l'enveloppe peuvent être constitués par un filet en matière non extensible qui entoure l'enveloppe, ou bien par une boîte rigide et indéformable dans laquelle est contenue l'enveloppe.

L'invention sera mieux comprise et d'autres caractéristiques, détails et avantages de celle-ci apparaitront plus clairement à la lecture de la description qui suit, faite à titre d'exemple en référence aux dessins annexés dans lesquels :
la figure 1 représente schématiquement un réservoir selon l'invention, vide ou en cours de remplissage;
la figure 2 représente schématiquement le réservoir rempli et relié à des moyens d'irrigation automatique de plantes en pots.

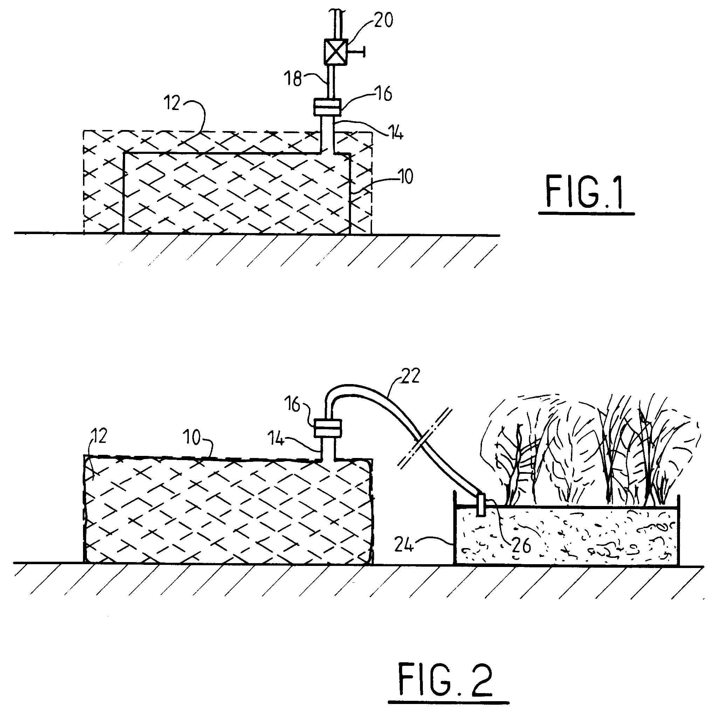

Le réservoir selon l'invention comprend essentiellement une enveloppe 10 en matière élastiquement extensible et étanche à l'eau, telle que du caoutchouc ou un élastomère synthétique, et qui est entourée d'un filet 12 en matière non extensible, telle qu'une matière plastique par exemple, ce filet 12 ayant des dimensions nettement supérieures à celles de l'enveloppe 10 à l'état libre ou sans contrainte de façon à délimiter quand il est tendu comme représenté en figure 1 un volume nettement supérieur au volume nominal de l'enveloppe 10.

Celle-ci comporte un embout 14 de remplissage et de vidange, réalisé par exemple dans la même matière que l'enveloppe 10 et se terminant par un raccord 16 de liaison à une conduite 18 d'arrivée d'eau sous pression équipée d'un robinet ou d'une vanne 20 d'ouverture et de fermeture.

En variante, le filet 12 peut être remplacé par une boîte en matière rigide et indéformable dans laquelle est placée l'enveloppe 10.

Lorsque l'enveloppe 10 est vide, elle a tendance à s'aplatir sur elle-même à l'intérieur du filet 12 ou de la boîte qui la contient et a alors un volume interne très faible. Pour la remplir, il suffit de la relier par l'embout 14 et le raccord 16 à la conduite 18 d'arrivée d'eau sous pression, dont on ouvre le robinet ou la vanne 20. L'eau sous pression remplit l'enveloppe 10 dont le volume interne augmente progressivement, d'abord sans tension élastique de la matière de l'enveloppe 10 tant que le volume d'eau à l'intérieur de l'enveloppe est inférieur au volume nominal de celle-ci, puis avec une tension élastique de la matière de l'enveloppe 10 qui se dilate sous l'effet de la pression de l'eau jusqu'à occuper tout le volume délimité par le filet 12 ou par la boîte contenant l'enveloppe. On ferme alors l'arrivée d'eau sous pression au moyen du robinet 20 et on déconnecte le raccord 16 de la conduite 18 d'arrivée d'eau sous pression.

Avantageusement, le raccord 16 est du type à obturation automatique par déconnexion, ce type de raccord étant largement disponible dans le commerce, en particulier pour les tuyaux d'arrosage.

Lorsque l'enveloppe 10 a été ainsi remplie, il suffit, comme représenté en figure 2, de relier le raccord 16 de son embout 14 à un conduit 22 de distribution d'eau vers des pots ou des bacs 24 contenant des plantations. En particulier, le conduit 22 peut alimenter un ou plusieurs dispositifs 26 d'irrigation automatique goutte-à-goutte d'un type bien connu, comprenant par exemple un élément sensible au degré d'humidité de la terre contenue dans un pot ou bac 24 pour commander l'amenée d'eau en fonction de ce degré d'humidité.

La pression de l'eau dans l'enveloppe dilatée 10 permet d'alimenter en eau les dispositifs 26 lorsque le réservoir selon l'invention est posé sur le sol au même niveau que les pots ou bacs 24. Cette alimentation se poursuit au moins jusqu'à ce que le volume interne de l'enveloppe 10 ait retrouvé sa valeur nominale, la pression de l'eau diminuant au fur et à mesure que la tension élastique de la matière de l'enveloppe 10 diminue.

L'enveloppe 10 peut avoir, par exemple, des dimensions maximales (à l'état remplie et dilatée par la pression de l'eau) correspondant à un volume de 15 à 20 litres environ, ce qui permet de transporter sans difficulté le réservoir lorsqu'il est complètement rempli. La pression relative de l'eau fournie par ce réservoir peut par exemple diminuer progressivement de 0,6 à 0,2 ou 0,1 bar au fur et à mesure que le réservoir se vide. Lorsque le volume maximum contenu dans ce réservoir est de l'ordre de 20 litres, le volume d'eau qui peut être fourni sous faible pression à des plantations peut être de l'ordre de 18 litres, ce qui permet une irrigation automatique goutte-à-goutte de pots ou de bacs de plantations pendant une durée de plusieurs semaines, en fonction de la taille de ces pots ou bacs.

Le réservoir selon l'invention peut être utilisé, de façon générale, chaque fois qu'une source d'eau ou de liquide sous faible pression est nécessaire, par exemple pour l'alimentation d'un pulvérisateur ou d'une douche de plage ou de camping.

Bien entendu, l'enveloppe du réservoir peut avoir un embout ou un orifice de sortie d'eau différent de l'embout 14 de remplissage décrit dans ce qui précède.

## Revendications

1. Réservoir d'eau, en particulier pour l'irrigation de plantes en pots, comprenant une enveloppe (10) fermée étanche munie de moyens (14, 16) de raccordement à une arrivée d'eau sous pression (18) et à un conduit (22) de distribution d'eau, caractérisé en ce que l'enveloppe est réalisée au moins partiellement en matière élastiquement extensible de façon à ce que son remplissage par de l'eau sous pression provoque sa dilatation et sa mise en tension élastique, cette dernière permettant ensuite une distribution d'eau sous faible pression et en ce qu'il comprend également des moyens (12) pour limiter la tension élastique de l'enveloppe à une valeur maximale prédéterminée, inférieure à la valeur de rupture ou de déchirement de la matière de l'enveloppe.

2. Réservoir selon la revendication 1, caractérisé en ce que les moyens limitant la dilatation de l'enveloppe (10) comprennent un filet (12) en matière non extensible entourant l'enveloppe.

3. Réservoir selon la revendication 1, caractérisé en ce que les moyens limitant la dilatation de l'enveloppe (10) comprennent une boîte indéformable dans laquelle est contenue l'enveloppe.

4. Réservoir selon l'une des revendications précédentes, caractérisé en ce que l'enveloppe (10) comprend un embout unique (14) de raccordement à l'alimentation d'eau sous pression et au conduit (22) de distribution d'eau, et des moyens (16) d'obturation, par exemple automatique, de cet embout.

5. Utilisation d'un réservoir selon l'une des revendications précédentes, caractérisée en ce que le conduit (22) de distribution d'eau est raccordé à des moyens (26) d'irrigation automatique de plantes en pots, à un pulvérisateur ou à une douche par exemple de camping ou de plage.
